# EUROPEAN PATENT SPECIFICATION

(11) **EP 2 399 069 B1**
(45) Date of publication and mention of the grant of the patent: **09.11.2016**
(21) Application number: 10713363.9
(22) Date of filing: 17.02.2010
(51) Int. Cl.: G02B 6/44

(54) **OPTICAL SENSOR FOR DETECTING CHANGES OF STATES**
OPTISCHER SENSOR ZUR ERFASSUNG VON ZUSTANDSÄNDERUNGEN
CAPTEUR OPTIQUE PERMETTANT DE DÉTECTER DES CHANGEMENTS D'ÉTAT

(30) Priority: 19.02.2009 IT TO20090119
(43) Date of publication of application: 28.12.2011
(73) Proprietor: Sirti S.p.A., 20127 Milano (IT)
(72) Inventor: COTTINO, Edoardo, I-20050 Zoccorino (MI) (IT)
(74) Representative: Di Gennaro, Sergio
(86) International application number: PCT/IB2010/000298
(87) International publication number: WO 2010/095015

(56) References cited:
- WO-A-98/12588
- WO-A-2004/100095
- JP-A- 2001 159 583

## Description

The present invention relates to an optical sensor for detecting changes of state.

In particular, the present invention regards an optical sensor that can be used along optical telecommunications lines for detecting changes of state, such as, for example, interventions on elements or accessories of the line (for instance, manholes or structures for carrying out work or for inspection, junction boxes, line panels or cabinets, etc.) and/or interventions on or damage to the line cable.

Such accessories are normally used for intervening on optical telecommunications lines (e.g., for jointing two stretches thereof), and possibly inserted inside them are apparatuses for monitoring the line or apparatuses that carry out maintenance on the line itself.

Some underground optical telecommunications lines, in addition to comprising the conventional optical-fibre cables, include a further monitoring cable, which is also an optical-fibre cable, that is usually buried at a lower depth with respect to the cable that conveys the telecommunications signals. The purpose of burying said cable at a higher level is to safeguard the cable of the telecommunications line from possible operations of excavation or boring that could damage it, in so far as, before this happens, the monitoring cable would be interrupted and by means of said cable an alarm can, for example, be activated.

JP 2001 159583 discloses a device for detecting opening and closing of a door or cover by use of a plurality of mechanical means applying bending to an optical cable. WO 2004/100095 discloses a security device using a magnetically induced fibre bending device.

Consequently, the present invention stems from the need to monitor a change of a logic state (on/off, open/closed) and to transmit the information via an optical fibre. A relevant example of application of the present invention is that of transmitting the information on opening and closing of a line cabinet, a junction box, or an inspection manhole of a line by means of the line itself, and in particular by means of the monitoring cable or possibly also by means of the data-transmission cable.

The sensor according to the present invention transmits the information on the change of state on the fibre due to a mechanical stress capable of bending the fibre with a pre-set radius of curvature, bringing about a modification in its behaviour in regard to the signal that traverses the fibre itself. Said variation of the signal can be detected in a monitoring station, for example set in the transmission apparatus of the telecommunications line, which is able to signal the change of the state detected by the sensor.

One aspect of the present invention regards an optical sensor for detection of changes of state having the characteristics specified in the annexed claim 1.

The characteristics and advantages of the sensor according to the present invention will emerge more clearly from the ensuing description, which is provided by way of non-limiting example, of one embodiment with reference to the attached drawings, wherein:

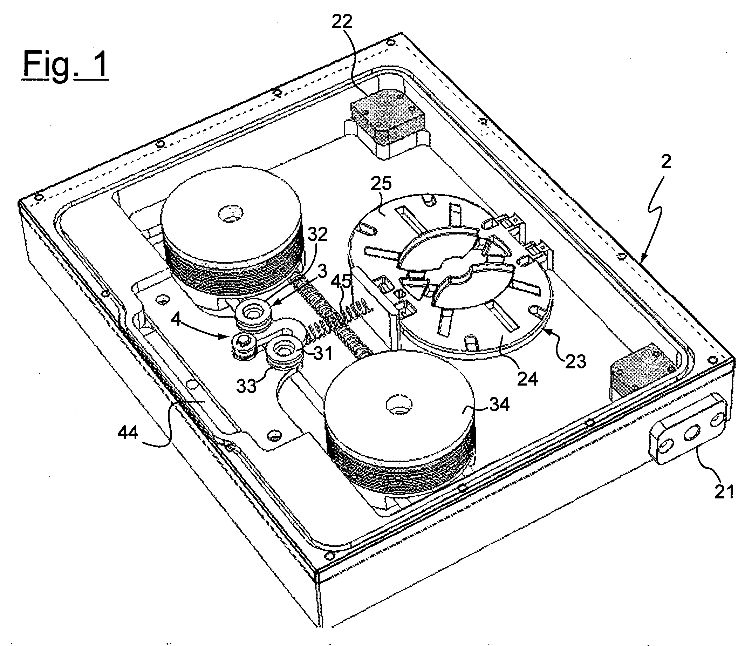

- Figure 1 illustrates in perspective view the ensemble of the elements of the sensor enclosed in a box-like casing;

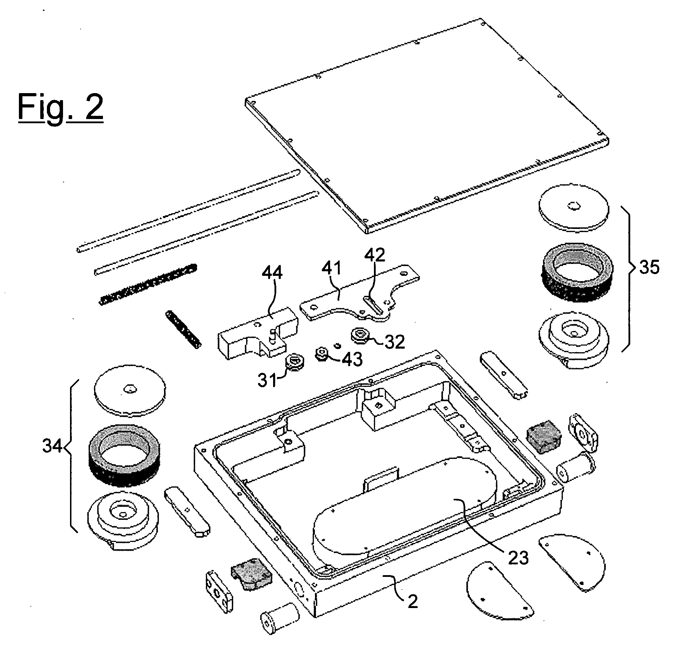

- Figure 2 is an exploded view of all the elements of Figure 1; and

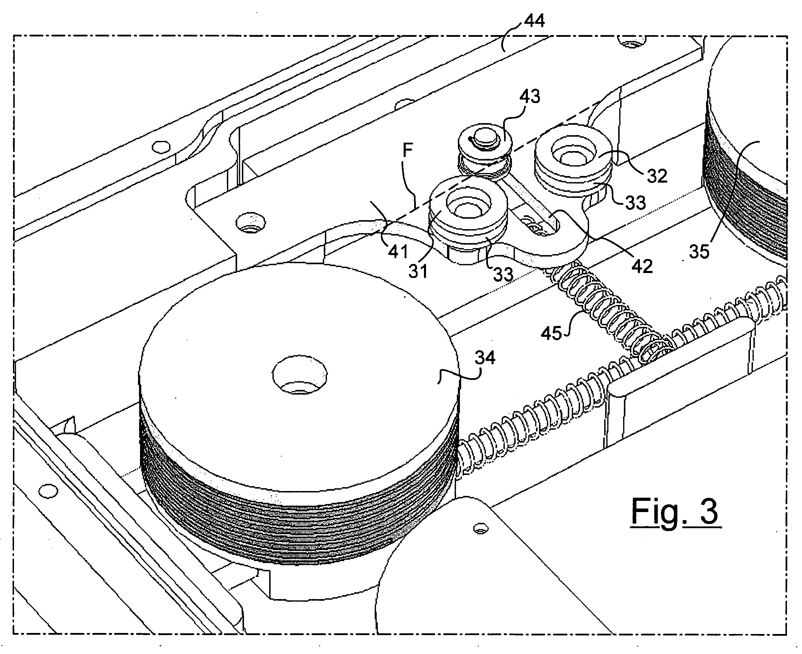

- Figure 3 is an enlarged detail of Figure 1.

With reference to the aforesaid figures, the sensor according to the present invention is set inside a housing 2 of a preferably box-like shape, which is in turn fixed in the operative position in the proximity of the event to be monitored. The housing has the purpose of keeping the elements of the sensor that are more brittle and sensitive to atmospheric agents protected.

The housing has inlet and outlet openings 21 and 22 for the optical cable on which the sensor acts, and a device 23 for storing optical fibre. Said device preferably comprises guide elements, which are designed to wind the optical fibres coming from the inlet openings on a first circular portion 24 of the device, and to wind the optical fibres coming out of said outlet opening on a second circular portion 25. The inlet and outlet openings are preferably provided with gasket and pre-gasket, which are designed to prevent entry of moisture and other agents into the housing. The sensor comprises a support 3 adapted to keep a stretch of optical fibre in position, and a slider 4, which in response to a change of state to be monitored brings about a movement such as to curve the aforesaid stretch of optical fibre.

It is known that a curvature of a stretch of optical fibre determines a perturbation of the optical signal that traverses it. Hence, by monitoring said perturbation it is possible to detect the change of state.

In one embodiment support 3 comprises a pair of rollers 31 and 32 that keep optical fibre F tensioned. Preferably, the rollers comprise a central groove 33 in which the fibre is received. The optical fibre is wound on a pair of reels 34 and 35 set alongside the rollers. The slider preferably comprises a plate 41, positioned on which are the rollers, which is provided with an elongated groove or opening 42 in which a curving roller 43 moves (said roller having a pre-set radius such as to induce the desired perturbation in the fibre) associated to a curving support 44. The curving support and the curving roller are held in position by a spring 45, set between the support itself and a central area of housing 2.

When the slider is activated by the change of state, it moves the curving support setting the curving roller in contact with the fibre, thus curving it in a pre-set and controlled way.

The movement of the slider can be obtained for example mechanically or magnetically. In the latter case, when the change of state regards opening of a door of a line cabinet, of a junction box, or of the cover of a manhole for junction between two stretches of optical telecommunications line, a magnet associated to the curving support is used, which, upon opening of the metal element (door of the cabinet, head of the junction box, or manhole cover) moves, thus countering the action of the spring and bringing about curvature of the fibre.

## Claims

1. An optical sensor for detection of changes of state, which can be positioned inside a housing (2), which is in turn fixed in its operative position in the proximity of the change of state to be monitored, said optical sensor comprising a support (3), adapted to keep a stretch of optical fibre (F) in position, and a slider (4), which, in response to the change of state to be monitored, moves in such a way as to curve the aforesaid stretch of optical fibre in a pre-set and controlled way, **characterized in that**
the support (3) comprises a pair of rollers (31,32) and the optical fibre (F) is wound on a pair of reels (34,35) set alongside the rollers keeping the optical fibre (F) tensioned, and **in that** the movement of the slider is obtained magnetically.

2. The sensor according to claim 1, wherein the rollers comprise a central groove (33) in which the fibre is received.

3. The sensor according to claim 1, wherein the slider comprises a plate (41), positioned on which are the rollers, which is provided with an elongated groove or opening (42) in which a curving roller of a pre-set radius (43) associated to a curving support (44) moves

4. The sensor- according to claim 3, wherein the curving support and the curving roller are held in position by a spring (45), set between the support itself and a central area of the housing (2) .

5. The sensor according to claim 1, wherein the change of state to be monitored is the opening of the door of a line cabinet, of a junction box, or of the cover of a manhole for junction between two stretches of optical telecommunications line.

6. The sensor according to claim 5, comprising a magnet associated to the curving support, which, upon opening of the door of a line cabinet, of a junction box, or of the manhole cover, moves, thus countering the action of the spring and bringing about curvature of the fibre.

## Patentansprüche

1. Optischer Sensor zum Erkennen von Zustandsänderungen, der in einem Gehäuse (2) positioniert sein kann, das wiederum in seiner Betriebsposition in der Nähe der zu überwachenden Zustandsänderung befestigt ist, wobei der optische Sensor einen Halter (3), der dafür geeignet ist, eine Lichtwellenleiter-Strecke (F) in Position zu halten, sowie einen Schieber (4) umfasst, der sich als Reaktion auf die zu überwachende Zustandsänderung derart bewegt, dass er die vorerwähnte Lichtwellenleiter-Strecke auf eine vorgegebene und gesteuerte Weise krümmt, **dadurch gekennzeichnet, dass**
der Halter (3) ein Paar Rollen (31, 32) umfasst, und der Lichtwellenleiter (F) auf ein Paar Trommeln (34, 35) gewickelt ist, die neben die Rollen gesetzt sind, die den Lichtwellenleiter (F) gespannt halten, und dass die Bewegung des Schiebers magnetisch erreicht wird.

2. Sensor nach Anspruch 1, wobei die Rollen eine mittlere Rille (33) umfassen, in der der Lichtwellenleiter aufgenommen ist.

3. Sensor nach Anspruch 1, wobei der Schieber eine Platte (41) umfasst, auf der die Rollen positioniert sind, die mit einer länglichen Rille oder Öffnung (42) versehen ist, in der sich eine Krümmungsrolle (43) mit einem vorgegebenen Radius bewegt, die in Verbindung mit einer Krümmungsunterstützung (44) steht.

4. Sensor nach Anspruch 3, wobei die Krümmungsunterstützung und die Krümmungsrolle von einer Feder (45) in Position gehalten werden, die zwischen die Unterstützung selbst und einen mittleren Bereich des Gehäuses (2) gesetzt ist.

5. Sensor nach Anspruch 1, wobei die zu überwachende Zustandsänderung das Öffnen der Tür eines Schaltschranks, eines Verteilerkastens oder der Abdeckung einer Einstiegsöffnung zur Verbindung zwischen zwei Strecken einer optischen Telekommunikationsleitung ist.

6. Sensor nach Anspruch 5, der einen Magneten umfasst, der mit der Krümmungsunterstützung in Verbindung steht, der sich beim Öffnen der Tür eines Schaltschranks, eines Verteilerkastens oder der Abdeckung der Einstiegsöffnung bewegt, wodurch der Aktion der Feder entgegengewirkt wird und eine Krümmung des Lichtwellenleiters herbeigeführt wird.

## Revendications

1. Capteur optique permettant de détecter des changements d'état, qui peut être positionné à l'intérieur d'un boîtier (2), qui est à son tour fixé dans sa position de travail à proximité du changement d'état à surveiller, ledit capteur optique comprenant un support (3), conçu pour maintenir une extension d'une fibre optique (F) en position, et un coulisseau (4) qui, en réponse au changement d'état à surveiller, se déplace de manière à courber l'extension de la fibre optique mentionnée ci-dessus de façon prédéfinie et contrôlée, **caractérisé en ce que**
le support (3) comprend une paire de galets (31, 32) et la fibre optique (F) est enroulée sur une paire de tambours (34, 35) agencés le long des galets qui maintiennent la fibre optique (F) en tension, et **en ce que** le déplacement du coulisseau est obtenu magnétiquement.

2. Capteur selon la revendication 1, dans lequel les galets comprennent une rainure centrale (33), dans laquelle la fibre est reçue.

3. Capteur selon la revendication 1, dans lequel le coulisseau comprend une plaque (41), sur laquelle sont placés les galets, qui est munie d'une rainure allongée ou d'une ouverture (42) dans laquelle se déplace un galet de courbure ayant un rayon prédéfini (43) associé à un support de courbure (44).

4. Capteur selon la revendication 3, dans lequel le support de courbure et le galet de courbure sont maintenus en position par un ressort (45), placé entre le support lui-même et une zone centrale du boîtier (2).

5. Capteur selon la revendication 1, dans lequel le changement d'état à surveiller est l'ouverture de la porte d'une armoire électrique, d'une boîte de jonction, ou du couvercle d'une trappe pour la jonction de deux extensions de lignes de télécommunication optique.

6. Capteur selon la revendication 5, comprenant un aimant associé au support de courbure, qui, au moment de l'ouverture de la porte d'une armoire électrique, d'une boîte de jonction, ou du couvercle de la trappe, se déplace, en s'opposant ainsi à l'action du ressort et en provoquant la courbure de la fibre.
